# EUROPEAN PATENT APPLICATION

(11) **EP 2 053 869 A1**
(43) Date of publication of application: **29.04.2009**
(21) Application number: 07301487.0
(22) Date of filing: 24.10.2007
(51) Int. Cl.: H04Q 3/64, H04L 12/18, H04M 3/56, H04N 7/15

(54) **Media server selection for conference within a call control system**

(71) Applicant: Alcatel Lucent, 75008 Paris (FR)
(72) Inventor: Venkata Subramanian, Jayaraman, 600051, Chennai, Tamil Nadu (IN); Swaminathan, Seetharaman, 600044, Chennai, Tamil Nadu (IN); Vas Rodrigues, Rosendo, 10585, Berlin (DE); Reher, Norbert, 70806, Kornwestheim, Baden-Württembert (DE)
(74) Representative: Nicolle, Olivier

(57) **Abstract**

The present invention relates to a control system (CCS) having trunks to receive setup signaling messages for setting up call sessions in a communication network, means to detect that a setup signaling message corresponds to a conference service requiring a conference bridge enabling a user to participate in and control a simultaneous communication involving a number of users, and means to host a conference bridge associated to said conference service on a media server (MS) that is selected from a pool of media servers capable of hosting conference bridges. This call control system further comprises means for determining said media server (MS) according to the geographical region of said media server (MS), said geographical region being determined at least from a key verification relative to said setup signaling message.

## Description

The present invention relates to the so-called « Next Generation Networks » (NGN). This concept of "next generation networking" is a broad term for emerging communication network architectures and technologies, which encompass the pure data networks and the plain old voice networks (PSTN for "Public Switched Telephone Network").

Typically, in a NGN architecture, the information is transmitted via data packets, generally based on the IP (Internet protocol) technologies, being pure IP or MPLS (for "Multi-Protocol Label Switching"). The acronym "VoIP" (Voice over IP) is often used to refer to this transmission of voice traffic over an IP-packets infrastructure.

According to the nature of the transmitted information (data, voice, video...), the packets could be handled differently by the communication network equipments, according to some QoS (Quality of Service) policies.

But in general, the transport-layer equipments (IP routers...) are not aware of this nature of the transmitted information, since the NGN architecture relies on a separation between the transport layer (or connectivity) and the call control layer.

Call sessions are typically handled by dedicated apparatus that are called differently according to manufacturers and standards. Usual terms comprise "softswitch" or "call controller". Hereafter, we will refer to this kind of apparatus as a call control system (CCS).

In addition to the control of call sessions per se, the call control systems are also responsible for higher-level services, like conference, three party conference and the like.

Conference and three party services may require the call control system to control a conference bridge enabling a user to participate in and control a simultaneous communication involving a number of users.

In an NGN network served by "softswitches", the conference bridges are hosted by a pool of media servers.

In a large country, these media servers can be located geographically very far apart.

Since network resource consuming, it becomes highly desirable to host the conference bridge from the nearest media server relative to the geographical region of the called/calling subscriber/user, in order to optimize the overall network resource consumption by selecting a media server appropriately based on nearness to most conferees, total perimeter of the conference data path, network load, etc...

This is of particularly higher importance where the NGN network covers Intelligent Networks (IN) and local traffic as well, as the quantum of conferences to be set per day/hour would be significantly higher.

The aim of the invention is to solve these issues.

It relates to a call control system having trunks to receive setup signaling messages for setting up call sessions in a communication network, means to detect that a setup signaling message corresponds to a conference service requiring a conference bridge enabling a user to participate in and control a simultaneous communication involving a number of users, and means to host the conference bridge associated to said service from on a media server.

According to a general definition of the invention, said call control system further comprises means for determining said media server according to the geographical region of said media server, said geographical region being determined at least from a key verification relative to said setup signaling message.

According to embodiments of the invention, this determination of said geographical region of said media server depends on a Calling Line Identity, contained in said setup signaling message, or on the identifier of the trunk from which said setup signaling message has arrived, or on the number of the called party, or on the trunk for which said signaling message is destined.

The call control system may comprise matching table for mapping values of said media servers and said geographical regions.

The call control system may comprise also matching table for mapping values of said geographical regions and said Calling line identities and/or said identifiers of trunks and/or said Called numbers.

For example, the determination of said geographical region of said media server is dynamic and depends on the addition of new users and the region to which they belong to, so that the total perimeter of IP packets is minimized.

The invention consists also on a communication network comprising such a call control system.

At last, another object of the invention is a method for controlling calls comprising a step of transmitting setup signaling message to a call control system for setting up call sessions in a communication network, a step of detection that a setup signaling message corresponds to a conference service requiring a conference bridge enabling a user to participate in and control a simultaneous communication involving a number of users, and a step for hosting a conference bridge associated to said service on a media server.

This method is characterized in that it further comprises a step of determining said media server according to the geographical region of said media server, said geographical region being determined at least from a key verification relative to said setup signaling message.

The invention would be more clearly explained in the following description, with the help of the annexed figures.

The **figure 1** illustrates a communication network comprising a call control system according to the invention.

The **figure 2** is a flowchart illustrating the steps relative to the determination of the nearest media server, according to the invention.

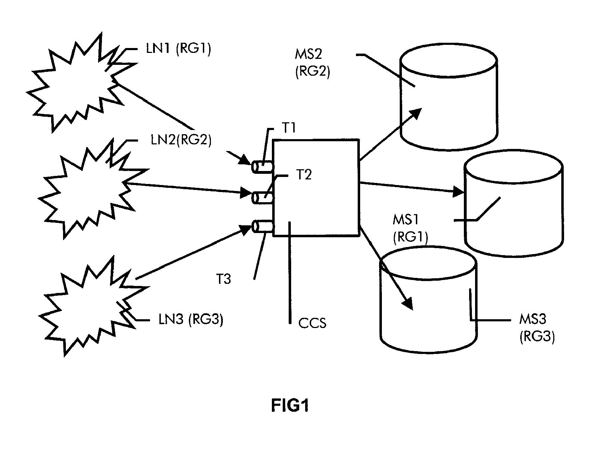

In the **figure 1****,** the communication network CN comprises a call control system CCS. This call control system can receive setup signaling message from various calling devices (telephone, IP terminals, etc.), T1, T2, T3, located in several geographical areas or regions RG1, RG2, RG3 corresponding to local communication networks, LN1, LN2, LN3, respectively.

Typically, these setup signaling messages may be compliant with the SIP protocol ("Session Initiation Protocol") as defined by the RFC 3261 of the IETF (Internet Engineering Task Force). In case of a converged call control system, like a media gateway control (MGC), the setup signaling messages can arrive from plain-old telecommunication networks (POTN) and be compliant with the ISUP protocol ("ISDN User Part").

The aim of the setup signaling messages (e.g. the "Invite" message of the SIP protocol) is to set up a conference between the calling device and a least a called device (not shown in the figure). As said previously, before establishing the conference, a conference bridge is needed. In such a situation, it is the responsibility of the call control system CCS to trigger the setup (or formation) of the conference bridge.

Typically again, the conference bridge is hosted on a media server MS, separated from the call control system itself.

A media server MS basically denotes an external device capable of hosting a multiparty conference bridge, i.e supporting multiple send/receive RTP streams, and copying information from each of these RTP streams to the other streams, based on instructions received from a call control system CCS. This media server could also support the interpretation of additional instructions from the call control system CCS for enhanced conference options.

The communication between the call control system CCS and a media server MS could be based on SIP (Session Internet Protocol). In such a case, the instructions are passed from the call control system CCS to the media server MS via SIP messages, and the response are provided by the media server MS to the call control system CCS also via SIP messages (with appropriate contents, for example, using SDP,etc).

Knowing the details of the conference bridge resources from the media server MS (by means of the SIP messages exchanged between the call control system CCS and the media server MS), the call control system can then use it to subsequently establish the conference between the calling party and additional conferees.

In practice, the entire country is divided into regions RG, and for each region RG a least one corresponding media server MS is associated.

For example, the media server MS1 corresponds to region RG1.

The determination of the nearest media server able to serve the conference bridge depends on the region corresponding to the setup signaling message (i.e. requested by the calling party and/or the called party).

In practice, the call center system CCS uses information relatives to the setup signaling message and extracts the region RG in which the conference bridge is to be used. A free media server MS within the identified region RG is then selected and the conference bridge is triggered.

As shown in the **figure 1****,** trunk T1 links the call control system CCS to the local communication network LN1 belonging to region RG1; the trunk T2 links it to the local communication network LN2 belonging to region RG2; and the trunk T3 links it to the local communication network LN3 belonging to region RG3.

According to the trunk identifier, the call control server CCS can determine which media server MS is present within the region RG corresponding to the local communication network LN.

For instance, if the media server MS1 is located in a region RG1 where the local communication network LN1 is identified by the trunk identifier, then the media server MS1would be chosen.

The Calling Line Identity (CLI) could also be used for selecting the media server. This Calling Line Identity CLI is typically the number of the party initiating the call, as defined by the recommendation E.164 of the ITU-T (International Telecommunication Union). This number is made of several parts as defined by the numbering plan. The prefix of the Calling Line identity CLI represents the region (geographical area). Using this prefix, the call control system CCS can therefore determine the media server.

However, this calling line identity CLI is not mandatory and could be not present in the setup signaling message.

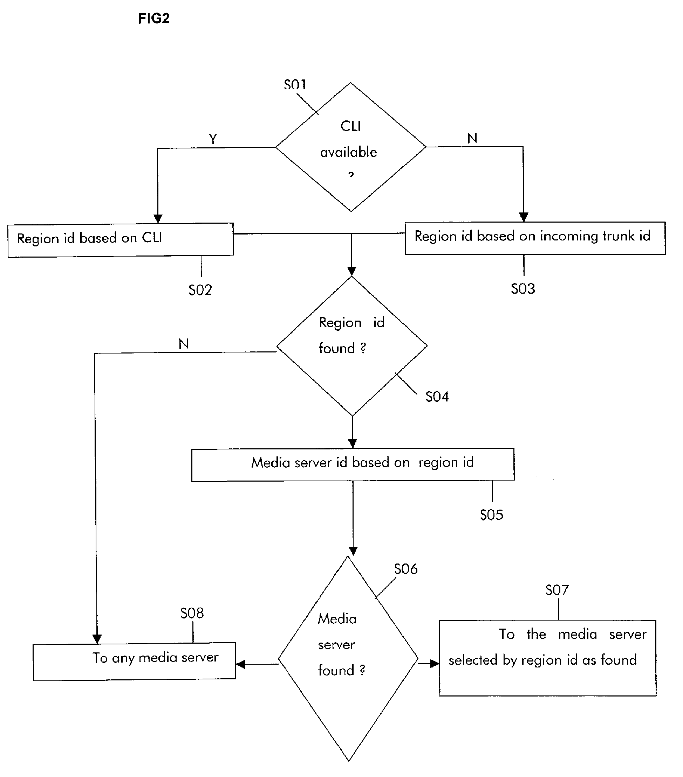

With reference to **figure 2****,** a flowchart has been represented illustrating the selection of the appropriate media server hosting the conference bridge.

At step S01, during the active phase of the call, the calling line identity CLI is examined.

If received, the CLI is extracted to find out the region identifier RG id of the region it belongs to (step S02).

In practice, CLI is the key to a table (for example called " TRANSLAREACOD") used for translation of received CLI (area code) into the corresponding region identifier RG id.

In case the CLI is not present, the unique trunk group identity (trunkgroup id) is used to obtain the region identifier RG id (step S03).

In practice, trunkgroup id is the key to a table (for example called "TKGIDLANID") used for translation of received trunkgroup identifier into the corresponding region identifier.

At step S04, the region identifier RG id thus obtained is processed. If the region identifier RG id thus obtained is found in a table (called "Media server table") for mapping of region id to media server id (step S05), said corresponding media server identifier MS id is used (step S06) to select the appropriate media server (step S07).

In case the region identifier RG id is not present in the media server table or in case the media server is not found, any media server would be selected (step S08).

In practice, each time the media server table is accessed, first a check is performed on whether the media server is active, enabled, etc. before a comparison is made on the required region identifier RG id and the region identifier RG id entry provided for the media server entry accessed in the table. After the entire table is scanned, if no match is found, then any found valid media server (for example, the last or the first active, enabled, etc. media server that is found) is selected.

In a variant, in case there is no media server found within the desired region, instead of selecting any media server, a solution is to select a media server from the neighboring region.

In some cases, the called number or outgoing trunkgroup identifier can be used to access the tables to obtain the region identifier id. The region identifier to media server identifier mapping is the same as that for the CLI case. The tables themselves can be generic, and do not distinguish between CLI/called number or incoming/outgoing trunkgroup id. In other words, the present invention is similar when the conference bridge is selected based on the called party ("CLI" replaced by called number, "incoming trunk id" replaced by "outgoing trunk id").

According to one embodiment of the invention, the Calling Line identity is used when it is present. When it is not, then the trunk identifier is used instead for determining which media server to select.

According to the invention, the call control system CCS contains means to match with each possibility of value for the calling line identity CLI and/or trunk identifiers, an address to the appropriate media server. These means could for instance be a simple matching table (s).

It is therefore quite easy for the operator of the system to modify this table in order to change a region to another, to add a new media server etc.

According to the present invention, further enhancements to the selection logic/optimization of network resources could take into account the load of the media server, media server capabilities, "dynamic reselection " depending on the addition of new conferees (and the region to which they belong to) so that the total perimeter of IP packets is minimized, selection of media server in a neighboring region (if no nearest media server is available in the "own" regions).

Thus, for example, assume User A sets up a conference bridge, and first adds User B to the bridge. User A is in Region A, and User B is in Region B. Assume that now a media server in Region A is selected. Now User A adds a third party User C into the conference. User C is also in Region B (i.e., Users B and C are in Region B). Now, it is possible to re-select a media server in Region B, so that the total perimeter of the IP packets will be minimized.

The present invention provides tremendous savings for both the network operator as well as the end user.

For network operator, savings in usage of expensive network resources (especially in large countries), both in term of number as well as the duration of use, can be freed up more quickly for other calls/services that increase the operator revenue.

Furthermore, since the present invention steers to have the nearest media server selected to have the connection of data of a conference service, the media server equipment can be dimensioned to the real needed capacity of that location or area. As an example, for the price of a large fully equipped media server, smaller media server can be distributed over various locations or areas to steer the needs for public or even product placement announcements of that area. Consequently, the operator of the network can generate additional revenues via product placement/publicity announcements of that area.

For end user, the savings are in terms of call charges due to the faster connection of the conference bridge.

Furthermore, cost savings are also obtained in case of optical fiber or satellite connections to the distant media server.

According to the present invention, further enhancements to the selection logic/optimization of network resources could take into account the load of the media server, media server capabilities, "dynamic reselection " depending on the addition of new conferees (and the region to which they belong to) so that the total perimeter of IP packets is minimized, selection of media server in a neighboring region (if no nearest media server is available in the "own" regions).

## Claims

1. Call control system (CCS) having trunks to receive setup signaling messages for setting up call sessions in a communication network, means to detect that a setup signaling message corresponds to a conference service requiring a conference bridge enabling a user to participate in and control a simultaneous communication involving a number of users, and means to host a conference bridge associated to said service on a media server (MS), **characterized in that** it further comprises means for determining said media server (MS) according to the geographical region of said media server (MS), said geographical region being determined at least from a key verification relative to said setup signaling message.

2. Call control system according to claim 1, in which said the determination of said geographical region (RG) of said media server (MS) depends on a Calling Line Identity (CLI), contained in said setup signaling message.

3. Call control system according to claim 2, in which said determination of said geographical region (RG) of said media server (MS) depends on the identifier of the trunk from which said setup signaling message has arrived, when the Calling Line Identity (CLI) is not available.

4. Call control system according to claim 1, in which said determination of said geographical region of said media server (MS) depends on the number of the called party.

5. Call control system according to claim 4, in which said determination of said geographical region of said media server (MS) depends on the trunk for which said signaling message is destined, when the called number is not present.

6. Call control system according to one of the previous claims, further comprising a matching table, mapping values of said media servers and said geographical regions.

7. Call control system according to claim 2, further comprising a matching table, mapping values of said geographical regions and said Calling line identities.

8. Call control system according to claim 3 or claim 5, further comprising a matching table, mapping values of said geographical regions and said identifiers of trunks.

9. Call control system according to claim 4, further comprising a matching table, mapping values of said geographical regions and said Called numbers.

10. Call control system according to claim1, in which said determination of said geographical region (RG) of said media server (MS) is dynamic and depends on the addition of new users and the region to which they belong.

11. Communication network comprising a call control system according to one of the previous claims.

12. Method for controlling calls comprising a step of transmitting setup signaling message to a call control system (CCS) for setting up call sessions in a communication network, a step of detection that a setup signaling message corresponds to a conference service requiring a conference bridge enabling a user to participate in and control a simultaneous communication involving a number of users , and a step for hosting a conference bridge associated to said conference service on a media server (MS), **characterized in that** it further comprises a step of determining said media server (MS) according to the geographical region of said media server (MS), said geographical region being determined at least from a key verification relative to said setup signaling message.
